# EUROPÄISCHE PATENTANMELDUNG

(11) **EP 1 512 320 A2**
(43) Veröffentlichungstag der Anmeldung: **09.03.2005**
(21) Anmeldenummer: 04103648.4
(22) Anmeldetag: 29.07.2004
(51) Int. Cl.: A01F 15/08, A01F 15/07

(54) **Rundballenpresse**

(30) Priorität: 28.08.2003 DE 10339652
(71) Anmelder: DEERE & COMPANY, Moline, Illinois 61265-8098 (US)
(72) Erfinder: Viaud, Jean, 70100, Arc les Gray (FR); Derscheid, Daniel, Ottumwa, IA Iowa 52501 (US); Guillemot, Sebastien, 70100, Gray (FR)
(74) Vertreter: Holst, Sönke, Dr.

(57) **Zusammenfassung**

Die Erfindung bezieht sich auf eine Rundballenpresse (10) mit einem Ballenpressraum (12) und einer im rückwärtigen Bereich des Ballenpressraums (12) angeordneten Tür (70), die um eine Schwenkachse (78) zwischen einer Schließposition, in der sich die Tür (70) entlang der Rückseite des Ballenpressraums (12) erstreckt, und einer Öffnungsposition beweglich ist, in der ein fertiggestellter Ballen (36) aus dem Ballenpressraum (12) auswerfbar ist. Es wird vorgeschlagen, dass sich die Schwenkachse (78) der Tür (70) zumindest näherungsweise vertikal erstreckt.

Alternativ oder zusätzlich wird empfohlen, dass die Rundballenpresse (10) einen unabhängig von der Tür (70) bewegbaren Träger (26) mit Mitteln zur Bildung eine Ballens (36) im Ballenpressraum (12) aufweist, der zwischen einer Ballenbildungsposition und einer Ballenauswurfposition bewegbar ist, und dass die Tür (70) den Träger (28) und die Mittel zur Bildung des Ballens (36) in der Schließposition nach hinten abdeckt.

## Beschreibung

Die Erfindung betrifft eine Rundballenpresse mit einem Ballenpressraum und einer im rückwärtigen Bereich des Ballenpressraums angeordneten Tür, die um eine Schwenkachse zwischen einer Schließposition, in der sich die Tür entlang der Rückseite des Ballenpressraums erstreckt, und einer Öffnungsposition beweglich ist, in der ein fertiggestellter Ballen aus dem Ballenpressraum auswerfbar ist.

Rundballenpressen finden Verwendung, um aus halmförmigem landwirtschaftlichen Erntegut Ballen herzustellen. Derartige Rundballenpressen weisen einen Ballenpressraum und zugehörige Pressmittel auf. Nach Fertigstellung eines Ballens schwenkt bei bekannten Rundballenpressen eine rückwärtige Tür nach oben, um den Ballen auszuwerfen.

Um zu erreichen, dass der Ballen aus dem Schwenkbereich der Tür gelangt, damit diese baldmöglichst wieder geschlossen werden kann, sind sogenannte Räumvorrichtungen bekannt, die den Ballen aus dem Schwenkbereich der Tür bewegen. Es wurde vorgeschlagen (DE 43 15 374 C), eine derartige Räumvorrichtung mit einer Rückhaltevorrichtung zu versehen, die verhindert, dass der Ballen zu weit von der Rundballenpresse weg- und beispielsweise einen Hang hinabrollt. Bei diesen Vorrichtungen handelt es sich um zusätzliche Elemente, die das Gewicht der Rundballenpresse vergrößern und ihre Herstellung aufwändiger und teurer machen.

Es wurden andere Bauformen von Rundballenpressen vorgeschlagen (EP 1 308 078 A), die einen Träger aufweisen, der Elemente haltert, welche das riemenförmige Pressmittel im unteren Bereich des Ballenpressraums der Rundballenpresse abstützen. Der Träger ist zwischen dieser Ballenbildungsposition und einer Ballenauswurfposition verschwenkbar, in der er nach hinten und oben verschwenkt ist und eine rückwärtige Öffnung der Ballenpresse freigibt. Bei derartigen Rundballenpressen finden sich im rückwärtigen Bereich sich im Betrieb bewegende Elemente, beispielsweise die Pressmittel. Unter Gesichtspunkten der Arbeitssicherheit sind diese Rundballenpressen nicht unbedenklich.

Die nachveröffentlichte DE 102 50 425 A schlägt bei einer derartigen Rundballenpresse einen rückwärtigen Schutz in Form eines Rollos oder ähnlicher beweglicher Einrichtungen vor.

Das der Erfindung zu Grunde liegende Problem wird darin gesehen, eine Rundballenpresse bereitzustellen, bei der die oben erwähnten Nachteile nicht oder in einem verminderten Maß vorliegen.

Dieses Problem wird erfindungsgemäß durch die Lehre der Patentansprüche 1 und 3 gelöst, wobei in den weiteren Patentansprüchen Merkmale aufgeführt sind, die die Lösung in vorteilhafter Weise weiterentwickeln.

Es wird vorgeschlagen, an der Rückseite des Ballenpressraums der Rundballenpresse eine Tür anzubringen, die um eine vertikale oder etwa vertikale Schwenkachse schwenkbar ist. Die Tür ist von den Pressmitteln des Ballenpressraums unabhängig, da letztere in der Regel nach oben verschwenkt werden, um den Ballenpressraum zum Auswurf eines Ballens nach hinten freizugeben. Durch die vertikale Anordnung der Schwenkachse kann die Tür ohne großen Energieaufwand und somit ohne große und kostenträchtige Antriebe geöffnet und geschlossen werden.

Alternativ oder zusätzlich wird vorgeschlagen, dass die Ballenpresse einen Träger aufweist, der Mittel zur Bildung eines Ballens im Ballenpressraum trägt und zwischen einer Ballenbildungsposition und einer Ballenauswurfposition beweglich ist, und dass die Tür unabhängig von dem Träger bewegbar ist. Dadurch erzielt man bei einer Ballenpresse, deren im Betrieb beweglichen Mittel zur Bildung des Ballens ansonsten nach hinten offen liegen, einen rückwärtigen Schutz zur Verbesserung der Arbeitssicherheit. Da die Tür unabhängig vom Träger bewegbar ist, kann sie in beliebige Richtungen bewegt und insbesondere um eine vertikale Achse verschwenkt werden.

In einer bevorzugten Ausführungsform dient die Tür als Rückhaltevorrichtung für den Ballen. Sie kommt mit ihrer Stirnseite mit dem ausgeworfenen Ballen in Berührung und bremst ihn ab. Dadurch kann verhindert werden, dass sich der Ballen zu weit von der Rundballenpresse fortbewegt. Um einen unerwünschten Verschleiß an der Tür zu vermindern, bietet es sich an, den am Ballen anliegenden Endbereich der Tür mit drehbeweglichen Elementen zu versehen, die frei drehbar oder gebremst sind.

In der Regel weist die Tür zwei Flügel auf, zwischen denen der Ballen ausgeworfen wird. Er kann somit an beiden Seiten abgebremst werden, was unerwünschte Drehbewegungen des Ballens um die Hochachse vermeidet. Es sind aber auch Ausführungsformen mit nur einer einzigen Tür denkbar.

Die Tür wird vorzugsweise in die Schließposition vorgespannt, was durch Gewichte und/oder Federn erfolgen kann. Damit erreicht man auch eine definierte seitliche Kraft auf den ausgeworfenen Ballen, die zu einer sicheren Bremsung hinreicht. Es kann jedoch auch angebracht sein, die Tür zusätzlich oder ausschließlich durch einen fremdkraftbetätigten (hydraulischen, pneumatischen oder elektrischen) Antrieb zu bewegen. In einer bevorzugten Ausführungsform bewegt der fremdkraftbetätigte Antrieb die Tür in eine Zwischenposition zwischen der Schließ- und Öffnungsposition. Aus dieser Position kann sie - beispielsweise durch den ausgegebenen Ballen - gegen die Vorspannung weiter geöffnet werden. Hierbei besteht die Möglichkeit, eine Kopplung zwischen dem Antrieb und der Tür vorzusehen, die über einen bestimmten Winkelbereich der Türbewegung eine freie Relativbewegung zwischen dem Antrieb und der Tür erlaubt.

Der fremdkraftbetätigte Antrieb kann mit der Bewegung des Trägers synchronisiert werden, um einen sinnvollen zeitlichen Ablauf der Bewegungen zu erzielen. Ein weiterer Vorzug eines derartigen Antriebs besteht darin, dass die Möglichkeit besteht, die beiden Flügel einer Tür um unterschiedliche Winkel zu drehen. Dadurch kann auch der Ballen in eine bestimmte, gewünschte Richtung gedreht werden, beispielsweise um zu verhindern, dass er einen Hang hinabrollt.

In der Zeichnung ist ein nachfolgend näher beschriebenes Ausführungsbeispiel der Erfindung dargestellt. Es zeigt:
- Fig. 1: eine erfindungsgemäße Rundballenpresse in einem leicht gefüllten Betriebszustand in Seitenansicht und schematischer Darstellung,
- Fig. 2: die Rundballenpresse nach Figur 1 in einem gefüllten Zustand,
- Fig. 3: die Rundballenpresse nach Figur 1 während des Entladevorgangs,
- Fig. 4: eine Draufsicht auf die Rundballenpresse während der Herstellung eines Ballens,
- Fig. 5: eine Draufsicht auf die Rundballenpresse nach der Abgabe eines Ballens,
- Fig. 6: eine Draufsicht auf eine Schwenkeinrichtung der Tür in der Schließposition,
- Fig. 7: eine seitliche Ansicht der Schwenkeinrichtung, und
- Fig. 8: eine Draufsicht auf die Schwenkeinrichtung der Tür in der Öffnungsposition.

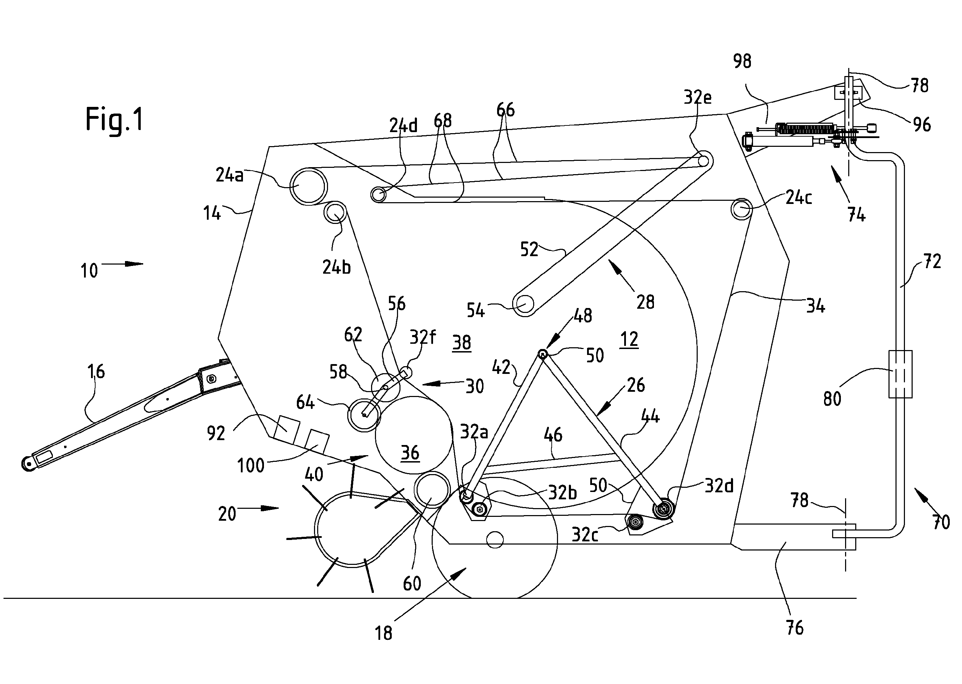

In der Figur 1 ist eine Ausführungsform einer Rundballenpresse 10 dargestellt, die einen Rahmen 14 aufweist, der sich auf einem Fahrwerk 18 abstützt. An der Vorderseite des Rahmens 14 ist eine Deichsel 16 angeordnet, um die Rundballenpresse 10 an einem Traktor anhängen und über ein Feld ziehen zu können. Eine Aufnahmevorrichtung 20 in Form einer Pick-Up dient zur Aufnahme von auf dem Boden liegenden Erntegut, z. B. in einem Schwad abgelegten Heu oder Stroh. Das von der Aufnahmevorrichtung 20 aufgenommene Erntegut wird dem Einlass eines Ballenpressraums 12 zugeführt und dort spiralförmig zu einem rund-zylindrischen Ballen 36 aufgerollt, gebunden und anschließend auf den Boden abgelegt.

Am Einlass 40 des Ballenpressraums 20 sind eine untere, stationäre Rolle 60 und zwei obere Rollen 62, 64 positioniert. Der Ballenpressraum 12 wird weiterhin durch ein endloses Pressmittel 34 in Form eines Riemens gebildet, der um eine Anzahl von ortsfesten Drehkörpern 24 und bewegbaren Drehkörpern 32 geführt wird. Während der Ballenpressraum 12 umfangsseitig im Wesentlichen von dem Pressmittel 34 umgeben wird, wird er seitlich von Seitenwänden 38 geschlossen.

Vier der Drehkörper 32a, 32b, 32c und 32d sind jeweils paarweise am Ende eines deltaförmigen Trägers 26 frei drehbar gelagert, der mit einem ersten Schenkel 42 und einem zweiten Schenkel 44 ausgebildet ist, die mittels einer Strebe 46 untereinander verbunden sind. Der erste und der zweite Schenkel 42 und 44 treffen sich in einem Lager 48, das auf einem Lagerteil 50 an der Außenseite der Seitenwand 38 aufgenommen wird. Der Lagerteil 50 befindet sich direkt im oder nahe dem Zentrum des Ballenpressraums 12 bzw. der Seitenwand 38. Auf jeder Seite der Rundballenpresse 10 ist ein Träger 26 und ein Lagerteil 50 vorgesehen, und zwar jeweils an der Außenseite der Seitenwand 38.

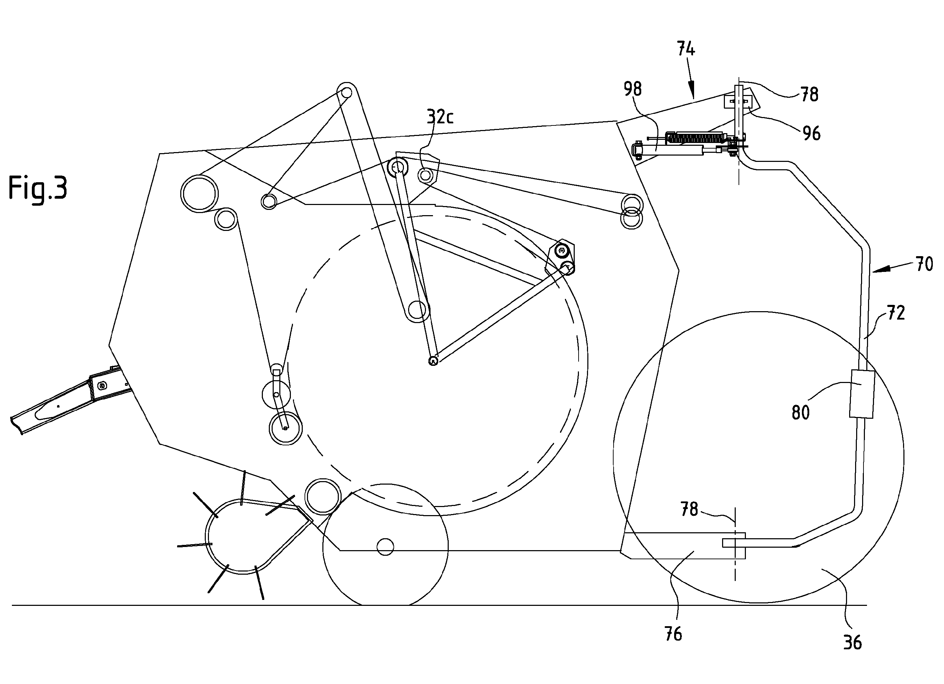

Die Verstellung des Trägers 26 erfolgt über einen nicht gezeigten Stellmotor, z. B. einem Hydraulikzylinder, einem drehenden Hydraulikmotor mit einem Getriebe oder einem Elektrooder Pneumatikmotor. Der Träger 26 kann zwischen zwei Endstellungen schwenken, nämlich einer unteren, in der sich die Drehkörper 32a bis 32d im Wesentlichen nahe einer horizontalen Ebene unterhalb des Ballenpressraums 12 befinden, und einer um nahezu 180 Grad nach oben versetzten Stellung, in der die Drehkörper 32c, 32d des zweiten Schenkels 44 zwischen dem dazwischengelegenen und dem hinteren ortsfesten Drehkörper 24d und 24c zu liegen kommen - s. Figur 3.

Ein Spannmechanismus 28 zur Straffung des Pressmittels 34 umfasst einen Spannarm 52, einen an dem radial außenliegenden Endbereich des Spannarms 52 beweglich angeordneten Drehkörper 32e und ein nicht gezeigtes Spannelement. Der Spannarm 52 ist im Bereich der Seitenwände 38 oberhalb und vor dem Lagerteil 50 vertikal schwenkbar in einem Lager 54 gelagert und erstreckt sich bis über die Ebene, um die die ortsfesten oberen Drehkörper 24 angeordnet sind. Das Spannelement ist in üblicher Weise als eine mechanische Feder oder als ein Hydraulikmotor ausgebildet, der gegen einen evtl. veränderbaren Widerstand bewegbar ist. Ein solcher Widerstand kann mittels einer vorzugsweise verstellbaren Drossel in einem Hydraulikkreis aufgebaut werden, wie dies an sich bekannt ist. Das Maß des Widerstands bestimmt zugleich die Dichte und das maximale Gewicht des Ballens 36.

Die oberen Rollen 62, 64 und der Drehkörper 32f sind an einem schwenkbaren Träger 30 befestigt, der einen Rahmen 56 umfasst, welcher in seinem Mittenbereich vertikal schwenkbar um eine Schwenkachse 58 gelagert ist. Der Drehkörper 32f und die Rollen 62, 64 sind frei drehbar in dem Rahmen 56 gelagert, wobei die Rolle 62 koaxial zu der Schwenkachse 58 verläuft. Der Rahmen 56 kann mittels eines Spannelements in eine bestimmte Stellung vorgespannt werden.

Das Pressmittel 34 verläuft unter anderem über die ortsfesten Drehkörper 24 und die beweglichen Drehkörper 32 und wird mittels des Spannmechanismus 28 stets so fest an wenigstens einem drehbar angetriebenen ortsfesten Drehkörper 24 angelegt, dass seine Mitnahme gewährleistet ist. Das Pressmittel 34 nimmt einen Anfangszustand ein, in dem es gerade gestreckt den Einlass 40 überbrückt, und einen Endzustand, in dem es sich wie eine große Schlaufe um den Ballen 36 schlingt. Der Ballenpressraum 12 ist somit in seiner Größe veränderlich, d. h. sein Durchmesser nimmt mit der Größe des Ballens 36 zu. Der Ballen 36 befindet sich während seiner Bildung in dem Ballenpressraum 12 und wird von dem Pressmittel 34 größtenteils umschlungen, fällt aber aus dem Ballenpressraum 12, d. h. dem Raum zwischen den Seitenwänden 38, auf den Boden, sobald - wie später beschrieben wird - der Träger 26 mit den beweglichen Drehkörpern 32 mit Blick auf die Zeichnung entgegen dem Uhrzeigerdrehsinn nach oben schwenkt.

Die Seitenwände 38 könnten quer zur Fahrtrichtung beweglich gelagert sein, damit sie beim Auswerfen des Ballens 36 dessen Anlagekraft an ihrer Innenseite reduzieren, so dass dieser leichter und somit schneller austritt. Es würde z. B. bereits ausreichen, wenn die Seitenwände 38 um wenige Zentimeter voneinander entfernt würden. Die Seitenwände 38 könnten mit den Trägern 26 beweglich ausgebildet werden.

Die Funktion der Rundballenpresse 10 ist folgendermaßen: Solange der Rundballenpresse 10 kein Gut zugeführt wird und der Ballenpressraum 12 leer ist, befindet sich der Träger 26 in seiner unteren, vorderen Endstellung, in der sich der erste, vordere Drehkörper 32a an dem ersten Schenkel 42 nahe der Rolle 60 befindet und sich die Drehkörper 32a - 32d nahe einer im Wesentlichen horizontalen Ebene befinden. Der Spannarm 52 wird nach hinten gedrängt. Der schwenkbare Träger 30 nimmt seine im Uhrzeigerdrehsinn weitest mögliche Endstellung ein. Ein Abschnitt des Pressmittels 34 erstreckt sich über die Innenseiten der Rollen 60 und 64 und verschließt somit den Einlass 40. Dieser Zustand ist in Figur 1 gezeigt.

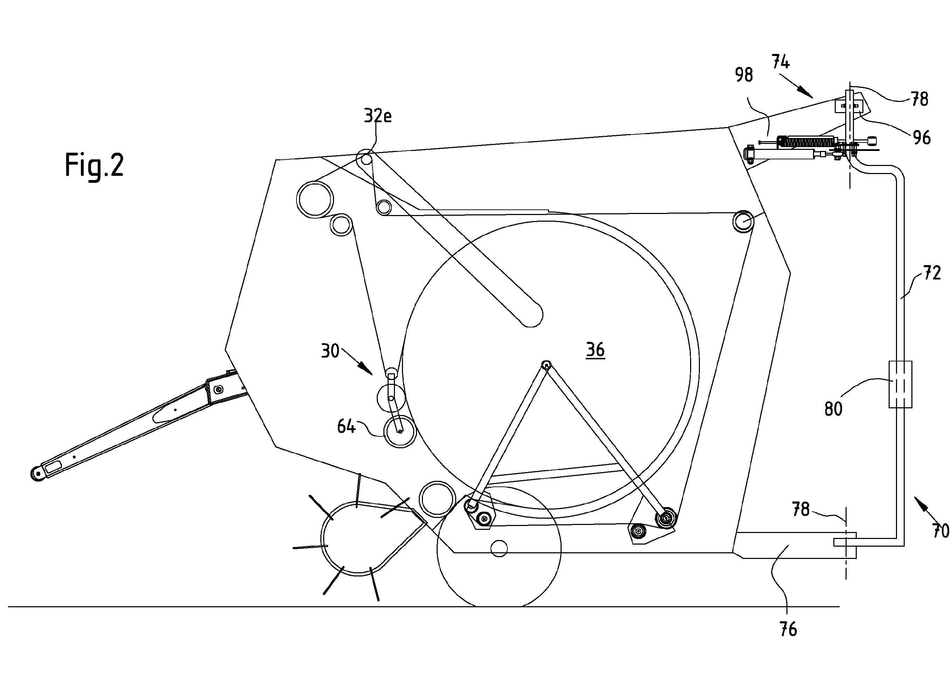

Sobald über die Aufnahmevorrichtung 20 Erntegut in den Ballenpressraum 12 gefördert wird, wird es den Abschnitt des Pressmittels 34 zum Innern des Ballenpressraums 12 hin auslenken, was bewirkt, dass der Spannarm 52 anfängt, sich nach vorne zu bewegen, um die vom Pressmittel 34 im oberen Bereich der Rundballenpresse 10 gebildeten Schlaufen 66, 68 zu verkürzen. Ab einem bestimmten Durchmesser wird der Ballen 36 an dem Drehkörper 32f anliegen und mit ihm den schwenkbaren Träger 30 entgegen dem Uhrzeigerdrehsinn schwenken. Dabei wird sich die Rolle 64 in den Ballenpressraum 12 hinein und den Ballen 36 von dem Einlass 40 weg bewegen, so dass ankommendes Erntegut leicht angenommen werden kann. Während der Ballendurchmesser zunimmt, bleibt der Träger 26 in seiner in den Figuren 1 und 2 gezeigten Stellung.

Wenn der Ballen 36 seinen größten Durchmesser erreicht hat (s. Figur 3), hat der schwenkbare Träger 30 seine maximale Stellung entgegen dem Uhrzeigerdrehsinn und der Spannarm 52 seine vorderste Stellung eingenommen, in der die erste Schlaufe 66 ihre geringste Länge einnimmt. Der Ballen 36 ruht vorne auf der Rolle 60 und dem angrenzenden ersten Drehkörper 32a. Im übrigen wird der Ballen 36 von der Spannung in dem Pressmittel 34 außer Kontakt mit dem ersten und dem zweiten Drehkörper 32c, 32d und den über sie verlaufenden Riemenabschnitten gehalten. Bei Bedarf kann zwischen den beiden zweiten Schenkeln 44 eine weitere nicht gezeigte Rolle vorgesehen werden, auf der sich der Ballen 36 abstützt. Wenn der Ballen 36 seine maximale Größe erreicht hat, wird aufgrund des radialen Versatzes des ersten und des zweiten Drehkörpers 32a und 32b an dem ersten Schenkel 42 verhindert, dass die einander benachbarten Trums des Pressmittels 34 aneinander anliegen. In diesem Zustand kann der Ballen 36 gebunden oder mit Folie oder Netz umwickelt werden, so dass er nach dem Austritt aus dem Ballenpressraum 12 nicht auseinander fällt.

Nachdem der Ballen 36 fertiggestellt ist, kann er aus dem Ballenpressraum 12 ausgeworfen werden, wozu der Träger 26 entgegen dem Uhrzeigerdrehsinn nach hinten und oben geschwenkt wird. Insbesondere aufgrund der Anlenkung des Trägers 26 im oder nahe dem Zentrum der Seitenwände 38 wird der Ballen 36 bereits nach einem kurzen Schwenkweg des Trägers 26 von z. B. ca. 90 Grad auf den Boden fallen. Nach einem Schwenkweg von z. B. ca. 180 Grad befindet sich der erste Drehkörper 32a an dem ersten Schenkel 42 so weit über dem Boden, dass die Rundballenpresse 10 weiter nach vorne gefahren werden kann, ohne an den Ballen 36 anzustoßen.

Sobald der Ballen 36 aus dem Ballenpressraum 12 herausgerollt ist, wird der Träger 26 wieder nach unten in die in Figur 1 gezeigte Stellung geschwenkt. Auf diesem Weg wird das Pressmittel 34 wieder gespannt und somit der Spannarm 52 wieder nach hinten bewegt.

Die dargestellte Ausführungsform der Ballenpresse ist in der EP 1 308 078 A detailliert offenbart. Andere, mögliche Ausführungsformen sind in der DE 198 51 470 A, DE 102 41 215 A und der EP 1 264 531 A beschrieben. Die Offenbarungen dieser Dokumente werden durch Verweis mit in die vorliegenden Unterlagen aufgenommen.

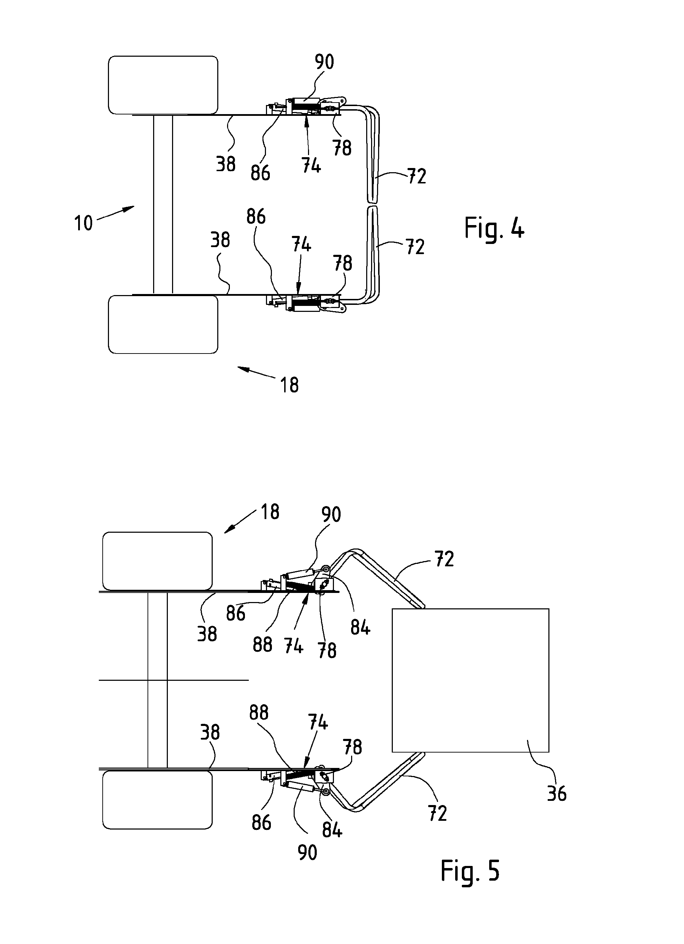

Anhand der Figuren 1 bis 3 erkennt man, dass die Rundballenpresse 10 nach hinten offen ist, damit der fertiggestellte Ballen 36 ausgestoßen werden kann. Die sich bei der Arbeit bewegenden Pressmittel 34 sind im rückwärtigen Bereich der Rundballenpresse 10 somit frei zugänglich, was unter Gesichtspunkten der Arbeitssicherheit unvorteilhaft ist. Um Letztere zu verbessern, ist an der Rückseite der Rundballenpresse 10 eine Tür 70 angeordnet. Die Tür 70 umfasst, wie anhand der Figuren 4 und 5 erkenntlich ist, zwei Flügel 72, die aus Rohren aufgebaut sind. Die Flügel 72 erstrecken sich in ihrer Schließposition jeweils von einer oberen Schwenkeinrichtung 74 an der Außen- und Oberseite der Rundballenpresse 10 zunächst nach unten, dann nach hinten und innen, dann wiederum nach unten und schließlich nach vorn bis zu einer unteren Schwenkeinrichtung 76. An den Schwenkeinrichtungen 74, 76 sind die Flügel 72 um vertikale, koaxiale Schwenkachsen 78 schwenkbar angelenkt. Dazu dienen Lagerungen 96, die zwischen mit der Rundballenpresse 10 verbundenen Armen 98 und den Flügeln 72 angeordnet sind. Die unteren Schwenkeinrichtungen 76 sind einfache Lagerungen, die in Aufbau und Funktion den Lagerungen 96 entsprechen.

Bei der Bildung des Ballens 36 befinden sich die Türen 70 in der Schließposition, wie in Figur 4 dargestellt. Bei der Abgabe des Ballens 36 gehen die Türen 70 in die Öffnungsposition über, wie in Figur 5 dargestellt ist, in der die Flügel 72 nach außen verschwenkt sind. Beim Auswerfen des Ballens 36 liegen an den vertikal verlaufenden Abschnitten der Flügel 72 frei oder gebremst drehbar gelagerte Elemente 80 in Form von Walzen an den Stirnflächen des Ballens 36 an.

Die Tür 70 erfüllt zum Einen die Aufgabe, eine Abschirmung des Trägers 26 und der sich bewegenden Pressmittel 34 bei der Bildung des Ballens 36 bereitzustellen, zum Anderen stellt sie beim Auswerfen des Ballens 36 eine Bremswirkung bereit. Sie dient somit als Rückhaltevorrichtung, die verhindert, dass der Ballen 36 zu weit von der Rundballenpresse 10 fort oder gar beispielsweise einen Hang hinabrollt. Durch die Abschirmwirkung der Türen erübrigt sich weiterhin die Notwendigkeit, den Träger 26 aus Arbeitssicherheitsgründen relativ langsam zu verschwenken. Zur Verbesserung der Abschirmwirkung der Tür 70 könnten die Flügel 72 durch flächige Platten, Tücher oder dergleichen ergänzt werden. Die Flügel 72 können aus Metall oder nichtmetallischem Material bestehen. Anstelle runder Rohre, wie sie in den Zeichnungen dargestellt sind, können auch eckige Rohre, Platten und/oder Bleche Verwendung finden.

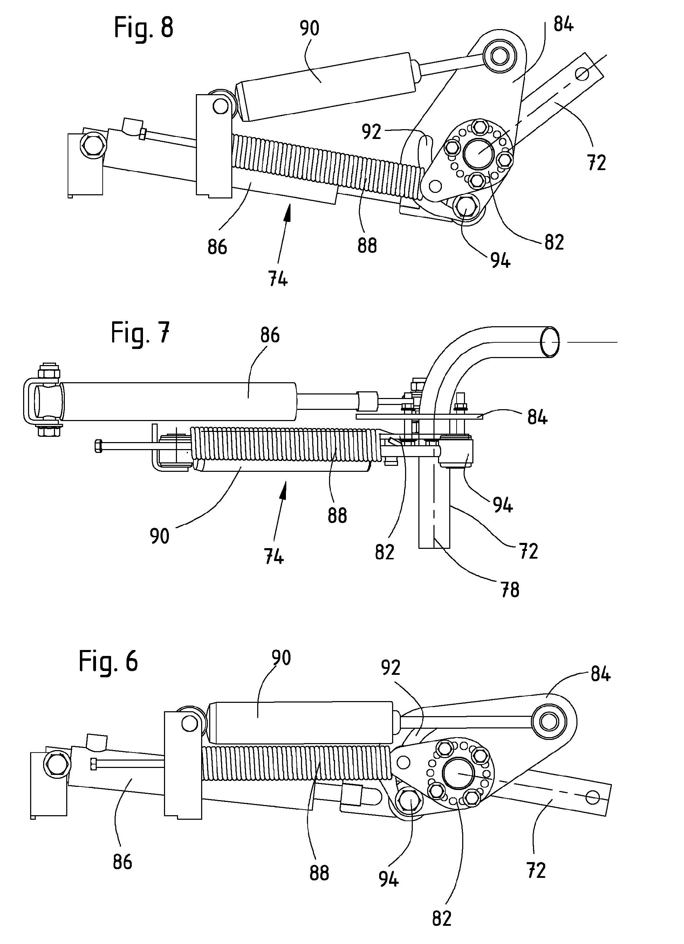

Die Figuren 6 bis 8 zeigen detaillierte Ansichten der Schwenkeinrichtung 74. Dargestellt ist jeweils die in den Figuren 4 und 5 oben eingezeichnete (in Fahrtrichtung der Rundballenpresse 10 rechte) Schwenkeinrichtung 74, die sich in der Figur 6 in der Schließposition und in den Figuren 7 und 8 in der Öffnungsposition befindet. Anhand dieser Figuren ist erkennbar, dass die Flügel 72 an der oberen Schwenkeinrichtung 74 jeweils durch einen Flansch 82 und Schraubbolzen an einer Schwenkplatte 84 befestigt sind. Die Schwenkplatte 84 und der Flansch 82 sind gemeinsam mit dem Flügel 72 um die Schwenkachse 78 drehbar. An der Schwenkplatte 84 ist in einem kreisbogenförmigen Langloch 92 ein Stift 94 gelagert, der mit einem Antrieb 86 in Form eines doppelt wirkenden Hydraulikzylinders verbunden ist. Der Kreisbogen des Langlochs 92 hat in seinem Mittelpunkt die Schwenkachse 78. Der Antrieb 86 ist anderen Endes an der Seitenwand 38 angelenkt. Außerdem erstreckt sich eine Feder 88 zwischen dem Flansch 82 und der Seitenwand 38. Weiterhin ist eine Gasdruckfeder 90 zwischen der Schwenkplatte 84 und der Seitenwand 38 angelenkt. Die Feder 88 spannt den Flügel 72 in die Schließposition vor. Die Gasdruckfeder 90 sorgt für eine Schwingungsdämpfung. Die Antriebe 86 ermöglichen ein aktives Öffnen und Schließen der Tür 70. Die Ankopplung des Antriebs 86 über den Stift 94 und das Langloch 92 an die Schwenkplatte 84 verhindert eine unerwünschte Beschädigung des Flügels 72, falls sich beim Schließen der Tür 70 noch ein Ballen 36 zwischen den Flügeln 72 befinden sollte. Anzumerken ist, dass die Abstützung der Flügel 72 an den Armen 98 durch die Lagerungen 96 erfolgt, s. Figur 1.

Die Antriebe 86 werden durch eine elektrohydraulische Steuereinrichtung 92 angesteuert. Letztere steuert auch die Bewegung des Trägers 26, so dass die Steuerung die Bewegungen der Tür 70 und des Trägers 26 in zeitlich abgestimmter Reihenfolge veranlassen kann. Die Tür 70 wird nach Verschwenken des Trägers 26 nach oben (in der Regel, sobald er sich etwa in der Mitte zwischen der Ballenbildungsposition und der Ballenauswurfposition befindet) durch die Antriebe 86 in eine geringfügig geöffnete Position verbracht, in der sie sich etwa in der Mitte zwischen den in den Figuren 4 und 5 gezeigten Stellungen befindet. Der ausgeworfene Ballen 36 bewegt die Flügel 72 gegen die Kraft der Federn 88 nach außen, wobei sich der Stift 94 gegenüber dem Langloch 92 bewegt, da der Antrieb 86 dann stationär bleibt. Der Ballen 36 wird durch die Flügel 72 abgebremst und zum Stehen gebracht. Danach verbringt die Steuereinrichtung 92 den Träger 26 wieder in die Ballenbildungsposition. Unabhängig davon kann der Antrieb 86 wieder eingefahren werden, sobald man (beispielsweise anhand einer verstrichenen Zeitspanne oder anhand des Signals eines geeigneten Sensors) davon ausgehen kann, dass der Ballen 36 zum Stehen gekommen ist. Kurz vor Erreichen der Schließposition wird vorzugsweise die Bewegung der Tür 70 verlangsamt, um die Unfallgefahr zu vermindern.

Die Bremswirkung der Tür 70 auf den Ballen 36 hat den Vorteil, dass ein unerwünschtes Wegrollen des Ballens 36 vermieden wird. Das ist insbesondere an einem Hang angebracht. In diesem Fall kann es sinnvoll sein, den Ballen in eine Schrägstellung gegenüber der Fahrtrichtung der Rundballenpresse 10 zu verbringen, so dass er quer zur Richtung des Hanggradienten ausgerichtet wird und nicht den Hang hinunter rollen kann. Dazu können die Antriebe 86 die Flügel 72 der Tür 70 in jeweils unterschiedliche Stellungen verbringen. Die Steuereinrichtung 92 ist somit eingerichtet, die beiden Antriebe 86 unterschiedlich anzusteuern. Außerdem ist sie mit einem Neigungssensor 100 in Form eines Pendels oder dergleichen verbunden, um die Antriebe 86 in geeigneter Weise ansteuern zu können. Eine Information über die Hangneigung kann auch aus den Signalen einer Satellitenantenne eines Positionsbestimmungssystems des Traktors abgeleitet werden.

## Patentansprüche

1. Rundballenpresse (10) mit einem Ballenpressraum (12) und einer im rückwärtigen Bereich des Ballenpressraums (12) angeordneten Tür (70), die um eine Schwenkachse (78) zwischen einer Schließposition, in der sich die Tür (70) entlang der Rückseite des Ballenpressraums (12) erstreckt, und einer Öffnungsposition beweglich ist, in der ein fertiggestellter Ballen (36) aus dem Ballenpressraum (12) auswerfbar ist, **dadurch gekennzeichnet, dass** sich die Schwenkachse (78) der Tür (70) zumindest näherungsweise vertikal erstreckt.

2. Rundballenpresse (10) nach Anspruch 1, **dadurch gekennzeichnet, dass** sie einen unabhängig von der Tür (70) bewegbaren Träger (26) mit Mitteln zur Bildung eines Ballens (36) im Ballenpressraum (12) aufweist, der zwischen einer Ballenbildungsposition und einer Ballenauswurfposition bewegbar ist, und dass die Tür (70) den Träger (26) und die Mittel zur Bildung des Ballens (36) in der Schließposition nach hinten abdeckt.

3. Rundballenpresse (10) mit einem Ballenpressraum (12), in dem sich ein bewegbarer Träger (26) mit Mitteln zur Bildung eines Ballens (36) befindet, der zwischen einer Ballenbildungsposition und einer Ballenauswurfposition bewegbar ist, **dadurch gekennzeichnet, dass** eine Tür (70), die zwischen einer Schließposition, in der sich die Tür (70) entlang der Rückseite des Ballenpressraums (12) erstreckt, und einer Öffnungsposition beweglich ist, in der ein fertiggestellter Ballen (36) aus dem Ballenpressraum (12) auswerfbar ist, den Träger (26) und die Mittel zur Bildung des Ballens (36) in der Schließposition nach hinten abdeckt, und dass die Tür (70) unabhängig vom Träger (26) bewegbar ist.

4. Rundballenpresse (10) nach einem der Ansprüche 1 bis 3, **dadurch gekennzeichnet, dass** die Tür (70) in der Öffnungsposition mit ihrem von der Schwenkachse (78) beabstandeten Endbereich an einem ausgeworfenen Ballen (36) zur Anlage kommt.

5. Rundballenpresse (10) nach Anspruch 4, **dadurch gekennzeichnet, dass** der am Ballen (36) anliegende Endbereich der Tür (70) mit einem drehbeweglichen Element (80) ausgestattet ist.

6. Rundballenpresse (10) nach einem oder mehreren der vorherigen Ansprüche, **dadurch gekennzeichnet, dass** die Tür (70) zwei Flügel (72) umfasst, von denen an jeder Seite der Rundballenpresse (10) jeweils einer angeordnet ist.

7. Rundballenpresse (10) nach einem oder mehreren der vorherigen Ansprüche, **dadurch gekennzeichnet, dass** die Tür (70) in die Schließposition vorgespannt ist.

8. Rundballenpresse (10) nach einem oder mehreren der vorherigen Ansprüche, **dadurch gekennzeichnet, dass** die Tür (70) durch einen fremdkraftbetriebenen Antrieb (86) beweglich ist.

9. Rundballenpresse (10) nach Anspruch 8, **dadurch gekennzeichnet, dass** der fremdkraftbetriebene Antrieb (86) betreibbar ist, die Tür (70) in eine Zwischenposition zwischen der Schließposition und der Öffnungsposition zu verbringen, und dass die Tür (70) in dieser Zwischenposition gegen eine Vorspannung weiter öffenbar ist.

10. Rundballenpresse (10) nach Anspruch 8 oder 9, **dadurch gekennzeichnet, dass** der Antrieb (86) der Tür (70) mit der Bewegung des Trägers (26) synchronisiert ist.

11. Rundballenpresse (10) nach einem der Ansprüche 6 bis 10, **dadurch gekennzeichnet, dass** die beiden Flügel (72) der Tür (70) um jeweils unterschiedliche Schwenkwinkel bewegbar sind.

12. Rundballenpresse (10) nach Anspruch 11, **dadurch gekennzeichnet, dass** die Schwenkwinkel der beiden Flügel (72) der Tür (70) abhängig von einer Hangneigung steuerbar sind.

13. Rundballenpresse (10) nach einem oder mehreren der vorherigen Ansprüche, **dadurch gekennzeichnet, dass** die Bewegung der Tür (70) im Endbereich der Schließbewegung gegenüber der übrigen Schließbewegung verlangsamt erfolgt.
